# EUROPÄISCHE PATENTSCHRIFT

(11) **EP 0 741 622 B1**
(45) Veröffentlichungstag und Bekanntmachung des Hinweises auf die Patenterteilung: **10.09.1997**
(21) Anmeldenummer: 95906259.7
(22) Anmeldetag: 23.01.1995
(51) Int. Cl.: B23C 5/20

(54) **SCHNEIDEINSATZ**
CUTTING INSERT
PLAQUETTE DE COUPE

(30) Priorität: 31.01.1994 DE 4402759
(43) Veröffentlichungstag der Anmeldung: 13.11.1996
(73) Patentinhaber: Widia GmbH, 45145 Essen (DE)
(72) Erfinder: STALLWITZ, Erwin, D-91584 Lichtenau (DE); STORCH, Helmut, D-91541 Rothenburg o.T. (DE)
(74) Vertreter: Schieferdecker, Lutz, Dipl.-Ing.
(86) Internationale Anmeldenummer: DE9500079
(87) Internationale Veröffentlichungsnummer: WO9520451

(56) Entgegenhaltungen:
- EP-A- 0 506 078
- EP-A- 0 517 019
- DE-A- 4 118 070
- FR-A- 2 561 960
- US-A- 5 123 788
- DATABASE WPI Section PQ, Week 9142, 4. Dezember 1991 Derwent Publications Ltd., London, GB; Class P54, AN 91-309265 & SU,A,1 611 583 (LEOR) 25. Oktober 1988

## Beschreibung

Die vorliegende Erfindung betrifft einen Schneideinsatz gemäß Oberbegriff von Patentanspruch 1, insbesondere in Gestalt einer Wendeschneidplatte mit mehreren Schneidkanten und ist für die spanende Bearbeitung von metallischen Werkstücken bestimmt.

Aus der EP-A1-0 517 019 ist bereits ein Schneideinsatz mit einem Plattenkörper bekannt, der eine Auflagefläche und mehrere Schneidkanten aufweist, wobei mindestens je eine Spanfläche und eine Freifläche jeder Schneidkante zugeordnet sind und jeweils mehrere Spanformelemente aufweisen. Diese Spanformelemente können entweder als Rippen oder als Vertiefungen ausgebildet sein und dienen dazu, den Span unmittelbar nach seiner Entstehung hinsichtlich Form und Gestalt sowie hinsichtlich seines Verhaltens zu beeinflussen.

Ferner sind aus der DE-A1-41 18 070 Spanformungselemente bekannt, die als erhabene, im Querschnitt bogenförmige Rippen am Grund einer gewölbten Spanfläche angeordnet sind. Sie sind in großer Anzahl unmittelbar nebeneinander sowie in Richtung des Spanflusses angeordnet und begünstigen ebenfalls die Spanbildung und sollen ferner dafür sorgen, daß die auftretenden Reibkräfte und die damit verbundene Wärmeentwicklung geringer sind als bei Verwendung von Schneideinsätzen ohne derartige Spanformungselemente.

Ferner ist aus der FR-A-2 561 960 ein Drehmeisel mit einer bogenförmig konkav gestalteten Schneide und einer konkaven Spanfläche bekannt, die im Abstand von der Schneidkante einen leicht balligen oder rippenförmigen, sich von der Schneidkante weg erstreckenden Vorsprung als Spanformungselement aufweist. Auch er soll, ebenso wie in den anderen Fällen, die Spanformung und Spanbildung günstig beeinflussen und die Standzeit des Werkzeuges erhöhen.

Obgleich die Verwendung von Spanformungselementen sicherlich zu besseren Ergebnissen geführt hat als dies zuvor ohne Spanformungselemente der Fall war, haben diese Maßnahmen noch nicht zu zufriedenstellenden Ergebnissen geführt. Der Erfindung liegt daher die Aufgabe zugrunde, einen Schneideinsatz zu schaffen, der eine besonders hohe Zerspanungsleistung besitzt und hohe Standzeiten ermöglicht sowie gleichzeitig kurzbrechende Späne erzeugt.

Zur Lösung dieser Aufgabe sieht die Erfindung vor, daß die Vertiefungen, in denen die Spanformungselemente angeordnet sind, sich bis zur Schneidkante erstrecken und zur Freifläche hin offen sind.

Die buckelförmigen oder gemäß einer Ausführungsform auch als Rippe gestalteten Spanformungselemente enden jeweils vor der Schneidkante oder laufen im Abstand von dieser allmählich aus. Die Schneidkante selbst ist entsprechend der Anzahl der Vertiefungen und der zugehörigen Spanformungselemente mehrfach unterbrochen und bildet dadurch keine kontinuierlich durchgehende Schneide. Zur Folge hat dies ferner eine unregelmäßige Kontur der Späne mit der Folge, daß diese in kurzem Abstand brechen. Aufgrund der sich ferner ergebenden, extrem kleinen Kontaktfläche zwischen Span und Schneideinsatz ist auch der Wärmeübergang günstig und belastet den Schneideinsatz in vergleichbarer Weise wenig.

Vorzugsweise sind die Schneidkanten im Bereich einer jeden Vertiefung mit einem Schneidkantenstück in die Freifläche bogenförmig ausgewölbt. Hierdurch wird eine relativ gleichmäßige Schneidkantenkontur erzielt.

Weitere Merkmale der Erfindung gehen aus Unteransprüchen und der Beschreibung im Zusammenhang mit der Zeichnung hervor.

Die Erfindung wird nachstehend anhand von Ausführungsbeispielen, die in der Zeichnung dargestellt sind, näher beschrieben. Dabei zeigen:
- Fig. 1:: eine perspektivische Ansicht eines zum Stand der Technik gehörenden Schneideinsatzes in größerem Maßstab;
- Fig. 2:: einen abgebrochenen Schnitt durch einen Schneideinsatz längs der Linie II-II in Figur 1 in nochmals größerem Maßstab;
- Fig. 3:: einen Schnitt wie in Figur 2 durch einen Schneideinsatz mit einem in einer Vertiefung angeordneten Spanformungselement;
- Fig. 4:: eine perspektivische Ansicht eines weiteren, abgewandelten Schneideinsatzes in nochmals anderem, ebenfalls größerem Maßstab;
- Fig. 5:: in größerem Maßstab sowie abgebrochen eine perspektivische Ansicht eines weiteren Schneideinsatzes;
- Fig. 6:: eine Ansicht wie in Figur 5 eines nochmals anderen Ausführungsbeispieles;
- Fig. 7:: eine Ansicht wie in den Figuren 5 und 6 von einem letzten Ausführungsbeispiel und
- Fig. 8:: einen Schnitt längs der Linie VIII-VIII in Figur 7.

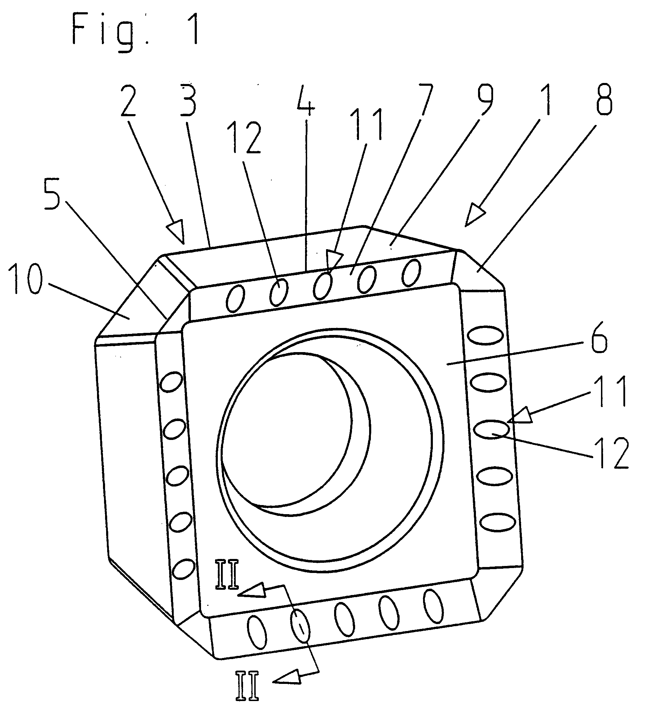

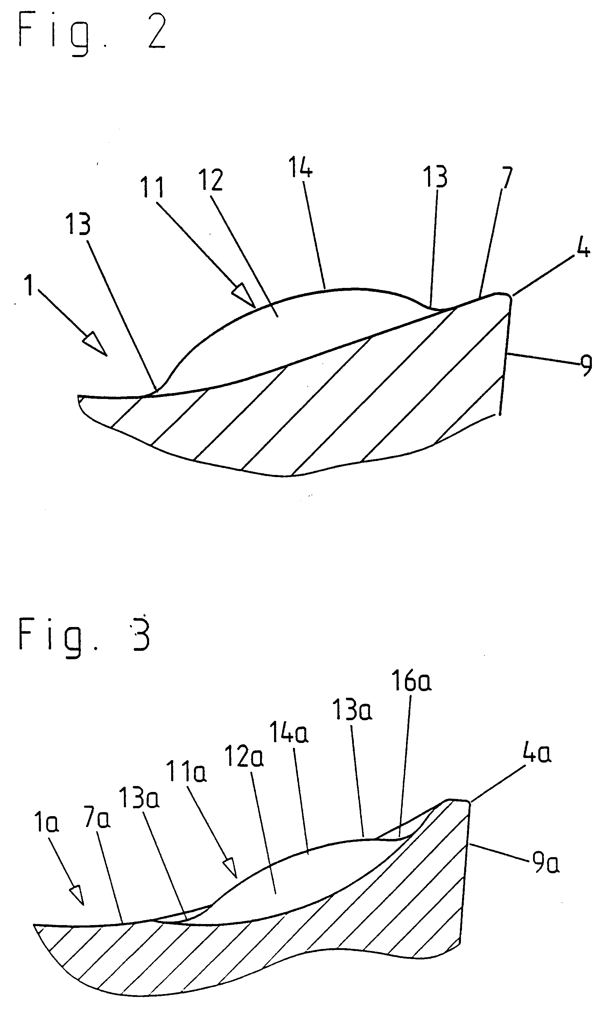

Ein an sich bekannter Schneideinsatz 1 gemäß Figur 1 umfaßt einen Plattenkörper 2 mit einer als Basisfläche dienenden Auflagefläche 3 und mit Schneidkanten 4 und 5 im Bereich der, der Auflagefläche 3 gegenüberliegenden Seite 6. Die Schneidkante 4 dient als Hauptschneide und die Schneidkante 5 dient als Nebenschneide, an die sich jeweils Spanflächen 7 und 8 sowie Freiflächen 9 und 10 anschließen. Die Spanflächen 7, 8 sind eben oder nach Art einer Hohlkehle gemäß den Darstellungen in den Figuren 2 und 3 leicht in sich gewölbt.

Auf den Spanflächen 7 sind Spanformungselemente 11 angeordnet. Diese Spanformungselemente 11 sind buckelförmige Erhebungen 12, die sich mit ihrer Kontur deutlich über die Spanfläche 7 erheben. Sie steigen jeweils aus der Spanfläche 7 allmählich an und fallen nach Erreichen der größten Höhe wieder in die Spanfläche allmählich ab. Dies gilt für ihre Kontur sowohl in Längsrichtung der Spanfläche 7 als auch quer dazu, wobei die Spanformungselemente 11 allerdings eine größere Länge als Breite besitzen. Ihre Hauptachse erstreckt sich dabei in Spanlaufrichtung.

Die Kontur der Spanformungselemente 11 ist im Bereich ihres in die Spanfläche 7 übergehenden Fußteiles 13 jeweils konkav und im Bereich des dazwischenliegenden Teiles 14 ist sie konvex, wie Figur 2 zeigt. Die Grundfläche der Spanformungselemente 11 ist etwa ellipsenförmig. Alle Spanformungselemente 11 enden schließlich jeweils vor der Schneidkante 4.

Die Anzahl der Spanformungselemente 11 auf jeder Spanfläche 7 ist relativ gering. Gemäß dem in Figur 1 dargestellten Ausführungsbeispiel sind nur fünf Spanformungselemente 11 auf jeder Spanfläche 7 in regelmäßigem Abstand sowie fluchtend angeordnet.

Die Größe der verschiedenen Spanformungselemente 11 auf einer Spanfläche 7 kann grundsätzlich auch unterschiedlich sein und es ist möglich, mehr oder weniger als fünf Spanformungselemente 11 auf einer Spanfläche 7 vorzusehen.

Die Figuren 3 bis 7 zeigen verschiedene Schneideinsätze, wobei jeweils gleiche Teile dieselben Bezugszahlen und unterscheidende Buchstabenindizes a, b usw. tragen.

Bei dem in Figur 3 dargestellten Schneideinsatz 1a ist das Spanformungselement 11a in einer ringförmigen Vertiefung 16a versenkt angeordnet. Das buckelförmige Spanformungselement 11a erhebt sich daher nicht unmittelbar von der Spanfläche 7a nach oben, sondern aus der Vertiefung 16a heraus. Fußseitig läuft jedes Spanformungselement 11a im Inneren der ringförmigen Vertiefung 16a sowie unterhalb des Niveaus der Spanfläche 7a aus. Ferner weist jedes Spanformungselement 11a eine solche Höhe auf, daß es seitlich über die Spanfläche 7a vorsteht.

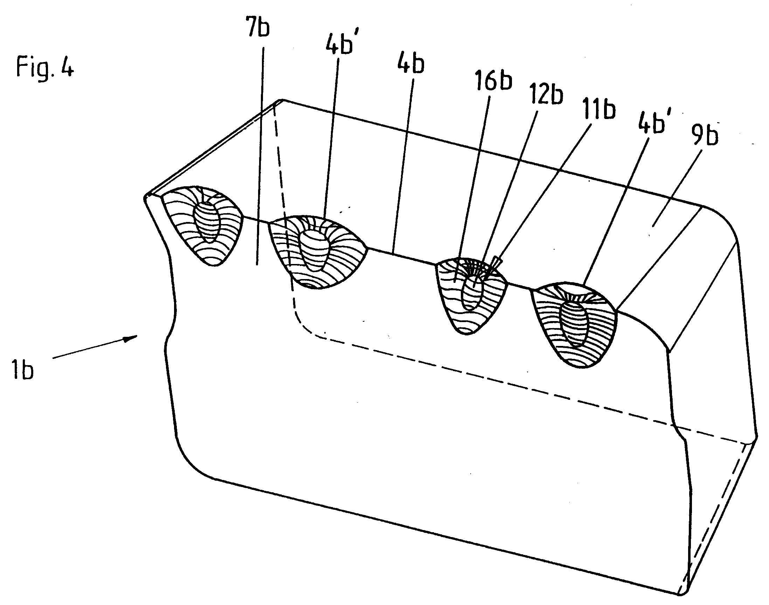

Die Figur 4 betrifft einen Schneideinsatz 1b mit - gemäß Ausführungsbeispiel - nur vier buckelförmigen Spanformungselementen 11b, die ferner jeweils in Vertiefungen 16b angeordnet sind. Diese Vertiefungen 16b erstrecken sich bis zur Schneidkante 4b und enden an dieser derart, daß die Schneidkanten 4b unterbrochen bzw. in die Freifläche 9b mit Schneidkantenstücken 4b' bogenförmig ausgewölbt ist. Im Inneren der Vertiefungen 16b sind die Spanformungselemente 11b als buckelförmige Erhebungen 12b angeordnet und liegen in den Vertiefungen 16b gleichsam in einer sich zur Freifläche 9b hin öffnenden Mulde.

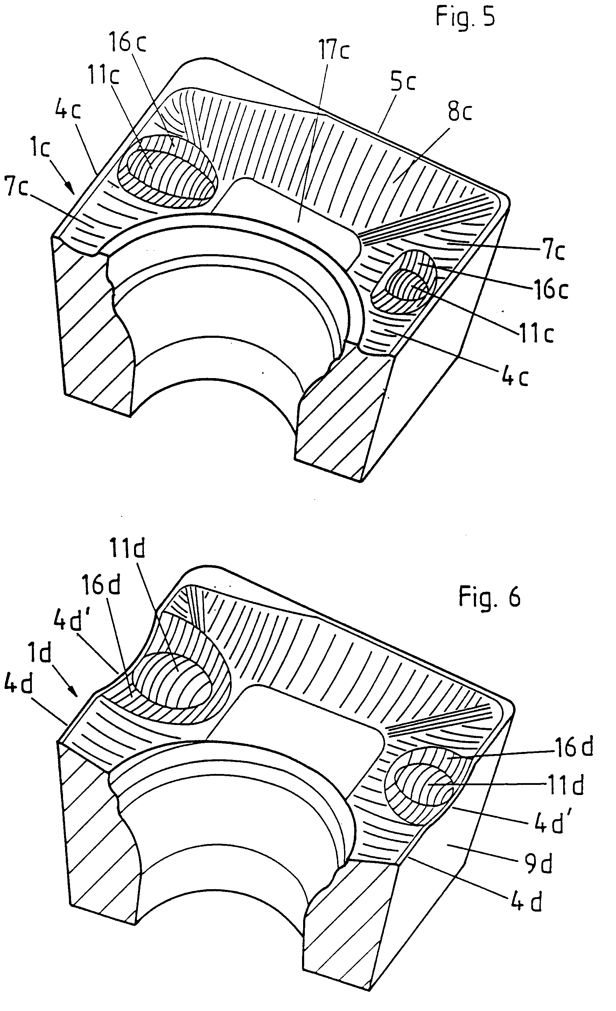

Der Schneideinsatz 1c gemäß Figur 5 weist eine sich von der bzw. von den Schneidkanten 4c und 5c zum Inneren hin abfallende Ausnehmung 17c und entsprechend zum Inneren hin abfallende Spanflächen 7c und 8c auf. In den beiden einander gegenüberliegenden Spanflächen 7c sind buckelförmige Spanformungselemente 11c nochmals gesondert versenkt in einer Vertiefung 16c angeordnet. Auch hier besitzen die Spanformungselemente 11c eine relativ große Breite und erheben sich deutlich über die Spanflächen 7c.

Charakteristisch ist ferner für den Schneideinsatz 1c, daß in jeder Spanfläche 7c nur sehr wenige, daß heißt gemäß dem konkret dargestellten Ausführungsbeispiel in jeder Spanfläche 7c nur zwei Spanformungselemente 11c vorgesehen sind.

Der Schneideinsatz 1d gemäß Figur 6 unterscheidet sich von dem Schneideinsatz 1c gemäß Figur 5 dadurch, daß die unmittelbar zur Aufnahme der Spanformungselemente 11d dienenden Vertiefungen 16d sich bis zu den Schneidkanten 4d derart erstrecken, daß die Schneidkanten 4d nicht ausschließlich Geraden sind, sondern sie sind unterbrochen und sie sind im Bereich der Vertiefungen 16d mit Schneidkantenstücken 4d' bogenförmig in die Freiflächen 9d ausgewölbt.

Die Vertiefungen 16d sind ferner nicht mehr ringförmig, sondern sie sind trog- oder muldenförmig bzw. talförmig und sie sind zu den Freiflächen 9d hin geöffnet. Außerdem sind wiederum an jeder Schneidkante 4d jeweils nur zwei Spanformungselemente 11d und entsprechend jeweils zwei Vertiefungen 16d und Schneidkantenstücke 4d' vorgesehen.

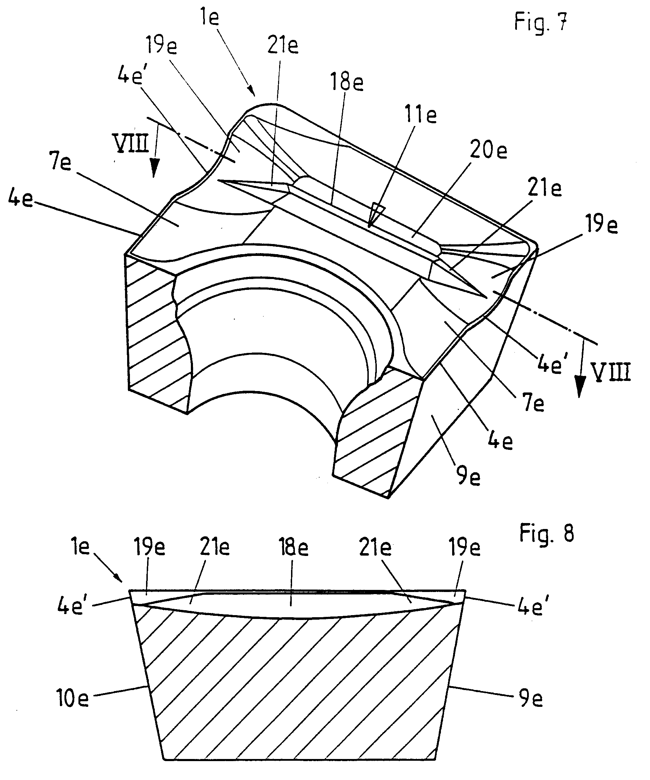

Die Figuren 7 und 8 betreffen schließlich einen Schneideinsatz 1e, der als Spanformungselement 11e eine Rippe 18e aufweist, die sich quer über den Schneideinsatz 1e erstreckt. Die den Schneidkanten 4e zugeordneten Spanflächen 7e weisen muldenförmige Vertiefungen 19e auf, die zu einer mittig angeordneten, die Rippe 18e tragenden Fläche 20e ansteigen und zu den Schneidkanten 4e hin abfallen. Die Schneidkanten 4e sind daher im Bereich der muldenförmigen Vertiefungen 19e unterbrochen bzw. bogenförmig mit Schneidkantenstücken 4e' zur Freifläche 9e hin bogenförmig ausgewölbt. Die muldenförmigen oder trog- bzw. talförmigen Vertiefungen 19e fallen zu den Freiflächen 9e hin ab. Ferner sind - wie bei dem Schneideinsatz 1d gemäß Figur 6 - jeweils nur zwei Vertiefungen 19e an jeder Schneidkante 4e vorgesehen, wobei jeweils nur eine Vertiefung 19e wegen der in Figur 7 gewählten Schnittansicht dargestellt ist.

Die als Spanformungselement 11e dienende Rippe 18e weist Endstücke 21e auf, die vom höchsten Niveau der Rippe 18e im Inneren der muldenförmigen Vertiefung 19e bis auf deren Niveau abfallen.

## Patentansprüche

1. Schneideinsatz mit einem Plattenkörper, der mindestens eine Auflagefläche und mindestens eine Schneidkante (4b, 4e) aufweist, wobei der Schneidkante mindestens je eine Spanfläche (7b) und eine Freifläche (9b) zugeordnet sind und wobei ferner buckelförmige Spanformungselemente (11b, 11e) in Vertiefungen (16b, 19e) in der Spanfläche (7b) angeordnet sind, dadurch gekennzeichnet, daß sich die Vertiefungen (16b, 19e) bis zur Schneidkante (4b, 4e) erstrecken und zur Freifläche (9b, 9e) hin offen sind.

2. Schneideinsatz nach Anspruch 1, dadurch gekennzeichnet, daß die Schneidkante (4b) im Bereich einer jeden Vertiefung (16b) mit einem Schneidkantenstück (4b') in die Freifläche (9b) bogenförmig ausgewölbt ist.

3. Schneideinsatz nach einem oder mehreren der vorhergehenden Ansprüche, dadurch gekennzeichnet, daß als Spanformungselement (11e) eine Rippe (18e) vorgesehen ist, die sich quer über den Schneideinsatz (1e) erstreckt und die mit Endstücken (21e) jeweils in muldenförmigen Vertiefungen (19e) ausläuft, die an den Schneidkanten (4e) zu den Freiflächen (9e) hin offen sind.

4. Schneideinsatz nach Anspruch 3, dadurch gekennzeichnet, daß die als Spanformungselement (11e) dienende Rippe (18e) Endstücke (21e) aufweist, die im Inneren der muldenförmigen Vertiefung (19e) von einem höchsten Niveau der Rippe (18e) bis auf das Niveau der Vertiefung (19e) abfallen.

5. Schneideinsatz nach einem oder mehreren der vorhergehenden Ansprüche, dadurch gekennzeichnet, daß jeweils zwei, vier bzw. fünf Vertiefungen und zugehörige Spanformungselemente je Schneidkante vorgesehen sind.

## Claims

1. A cutting insert comprising a plate body which has at least one support surface and at least one cutting edge (4b, 4e), wherein associated with the cutting edge are at least one respective chip surface (7b) and free surface (9b) and wherein moreover hump-shaped chip-shaping elements (11b, 11e) are arranged in depressions (16b, 19e) in the chip surface (7b), characterised in that the depressions (16b, 19e) extend to the cutting edge (4b, 4e) and are open to the free surface (9b, 9e).

2. A cutting insert according to claim 1 characterised in that in the region of each depression (16b) the cutting edge (4b) is curved out arcuately with a cutting edge portion (4b') into the free surface (9b).

3. A cutting insert according to one or more of the preceding claims characterised in that provided as the chip-shaping element (11e) is a rib (18e) which extends transversely over the cutting insert (1e) and which terminates with end portions (21e) in respective trough-shaped depressions (19e) which are open at the cutting edges (4e) to the free surfaces (9e).

4. A cutting insert according to claim 3 characterised in that the rib (18e) serving as the chip-shaping element (11e) has end portions (21e) which drop away in the interior of the trough-shaped depression (19e) from a highest level of the rib (18e) to the level of the depression (19e).

5. A cutting insert according to one or more of the preceding claims characterised in that there are provided two, four or five respective depressions and associated chip-shaping elements for each cutting edge.

## Revendications

1. Insert de coupe avec un corps de plaquette qui comporte au moins une surface d'appui et au moins une arête coupante (4b, 4e), à l'arête coupante étant associée au moins respectivement une face de coupe (7b) et une face de dépouille (9b) et où sont disposés en outre des éléments (11b, 11e) en forme de bosse, destinés à former les copeaux dans des creux (16b, 19e) dans la face de coupe (7b), caractérisé en ce que les creux (16b, 19e) s'étendent jusqu'à l'arête coupante (4b, 4e) et sont ouverts en direction de la face de dépouille (9b, 9e).

2. Insert de coupe selon la revendication 1, caractérisé en ce que l'arête coupante (4b), au voisinage de chaque creux (16b), est bombée en forme d'arc avec un tronçon (4b') d'arête coupante dans la face de dépouille (9b).

3. Insert de coupe selon l'une ou plusieurs des revendications précédentes, caractérisé en ce qu'il est prévu comme élément (11e) à former les copeaux une nervure (18e) qui s'étend transversalement sur l'insert de coupe (1e) et qui se termine par des pièces d'extrémité (21e) respectivement dans des creux en forme de cuvette (19e) qui sont ouverts aux arêtes coupantes (4e) vers les faces de dépouille (9e).

4. Insert de coupe selon la revendication 3, caractérisé en ce que la nervure (18e) servant d'élément (11e) à former les copeaux présente des pièces d'extrémité (21e) qui s'étendent à l'intérieur du creux en forme de cuvette (19e) du niveau le plus élevé de la nervure (18e) jusqu'au niveau du creux (19e).

5. Insert de coupe selon l'une ou plusieurs des revendications précédentes, caractérisé en ce que sont prévus respectivement deux, quatre, respectivement cinq creux et éléments associés pour former les copeaux par arête coupante.
